# EUROPEAN PATENT APPLICATION

(11) **EP 4 141 659 A1**
(43) Date of publication of application: **01.03.2023**
(21) Application number: 22188069.3
(22) Date of filing: 01.08.2022
(51) Int. Cl.: G06F 9/30

(54) **BFLOAT16 ARITHMETIC INSTRUCTIONS**

(30) Priority: 31.08.2021 US 202117463398
(71) Applicant: INTEL Corporation, Santa Clara, CA 95054 (US)
(72) Inventor: ADELMANN, Menachem, 7179034 Modi'in (IL); HEINECKE, Alexander, San Jose, CA, 95134 (US); VALENTINE, Robert, 36054 Kiryat Tivon (IL); SPERBER, Zeev, 3092832 Zichron Yackov (IL); GRADSTEIN, Amit, 3052316 Binyamina (IL); CHARNEY, Mark, Lexington, MA, 02421 (US); GEORGANAS, Evangelos, San Jose, CA, 95129 (US); KALAMKAR, Dhiraj, 560103 Bangalore (IN); HUGHES, Christopher, Santa Clara, CA, 95051 (US); ANDERSON, Cristina, Hillsboro, OR, 97124 (US)
(74) Representative: Samson & Partner Patentanwälte mbB

(57) **Abstract**

Techniques for performing arithmetic operations on BF16 values are described. An exemplary instruction includes fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on BF16 data elements in that data element position in BF16 format and store a result of each arithmetic operation into a corresponding data element position of the identified packed data destination operand.

## Description

### BACKGROUND

In recent years fused-multiply-add (FMA) units with lower-precision multiplications and higher-precision accumulation have proven useful in machine learning/artificial intelligence applications, most notably in training deep neural networks due to their extreme computational intensity. Compared to classical IEEE-754 32-bit (FP32) and 64-bit (FP64) arithmetic, this reduced precision arithmetic can naturally be sped up disproportional to their shortened width.

### BRIEF DESCRIPTION OF DRAWINGS

Various embodiments in accordance with the present disclosure will be described with reference to the drawings, in which:
**FIG. 1** illustrates an exemplary execution of an instruction to perform an arithmetic operation on source BF16 data elements.
**FIG. 2** illustrates an embodiment of method performed by a processor to process a perform an arithmetic operation on BF16 data elements instruction.
**FIGS. 3-6** illustrate exemplary embodiments of pseudo code representing the execution and format of V{ARITH}NEPBF16 instructions.
**FIG. 7** illustrates an exemplary execution of an instruction to calculate a reciprocal of BF16 data elements.
**FIG. 8** illustrates an embodiment of method performed by a processor to process a calculate an approximate reciprocal of BF16 data elements instruction.
**FIG. 9** illustrates exemplary embodiments of pseudo code representing the execution and format of an VRCPNEPBF16 instruction.
**FIG. 10** illustrates embodiments of hardware to process an instruction such as the V{ARITH}NEPBF16 and/or VRCPNEPBF16 instructions.
**FIG. 11** illustrates embodiments of an exemplary system.
**FIG. 12** illustrates a block diagram of embodiments of a processor that may have more than one core, may have an integrated memory controller, and may have integrated graphics.
**FIG. 13(A)** is a block diagram illustrating both an exemplary in-order pipeline and an exemplary register renaming, out-of-order issue/execution pipeline according to embodiments of the invention.
**FIG. 13(B)** is a block diagram illustrating both an exemplary embodiment of an in-order architecture core and an exemplary register renaming, out-of-order issue/execution architecture core to be included in a processor according to embodiments of the invention.
**FIG. 14** illustrates embodiments of execution unit(s) circuitry, such as execution unit(s) circuitry of FIG. 13(B).
**FIG. 15** is a block diagram of a register architecture according to some embodiments.
**FIG. 16** illustrates embodiments of an instruction format.
**FIG. 17** illustrates embodiments of an addressing field.
**FIG. 18** illustrates embodiments of a first prefix.
**FIGS. 19(A)****-(D)** illustrate embodiments of how the R, X, and B fields of the first prefix 1601(A) are used.
**FIGS. 20(A)****-(B)** illustrate embodiments of a second prefix.
**FIG. 21** illustrates embodiments of a third prefix.
**FIG. 22** illustrates a block diagram contrasting the use of a software instruction converter to convert binary instructions in a source instruction set to binary instructions in a target instruction set according to embodiments of the invention.

### DETAILED DESCRIPTION

The present disclosure relates to methods, apparatus, systems, and non-transitory computer-readable storage media for performing arithmetic operations on BF16 data elements. BF16 is gaining traction due to its ability to work well in machine learning algorithms, in particular deep learning training. The FP32 format 101 has a sign bit (S), an 8-bit exponent, and a 23-bit fraction (a 24-bit mantissa that uses an implicit bit). The FP16 format 103 has a sign bit (S), a 5-bit exponent, and a 10-bit fraction. The BF16 format 105 has a sign bit (S), an 8-bit exponent, and a 7-bit fraction.

In contrast to the IEEE 754-standardized 16-bit (FP16) variant, BF16 does not compromise on range when being compared to FP32. FP32 numbers have 8 bits of exponent and 24 bits of mantissa (including the one implicit). BF16 cuts 16 bits from the 24-bit FP32 mantissa to create a 16-bit floating point datatype. In contrast FP16, roughly halves the FP32 mantissa to 10 explicit bits and reduces the exponent to 5 bits to fit the 16-bit datatype envelope.

Although BF16 offers less precision than FP16, it is typically better suited to support deep learning tasks. FP16's range is not enough to accomplish deep learning training out-of-the-box due to its limited range. BF16 does not suffer from this issue and the limited precision may actually help to generalize the learned weights in the neural net training task. In other words, lower precision can be seen as offering a built-in regularization property.

Detailed herein are embodiments of instructions, and their support, that natively operate on BF16 source data elements by performing one of an addition, subtraction, multiplication, divisional, or calculation of a reciprocal. In some embodiments, instructions are defined such as their execution is to treat denormal inputs or outputs as zeros, support any rounding mode, and/or report or suppress floating point numerical flags. No upconversion, etc. is needed for these instructions to operate. However, while exact arithmetic operations may be performed (such as add, divide, multiply, subtract) a final result to be stored may be rounded.

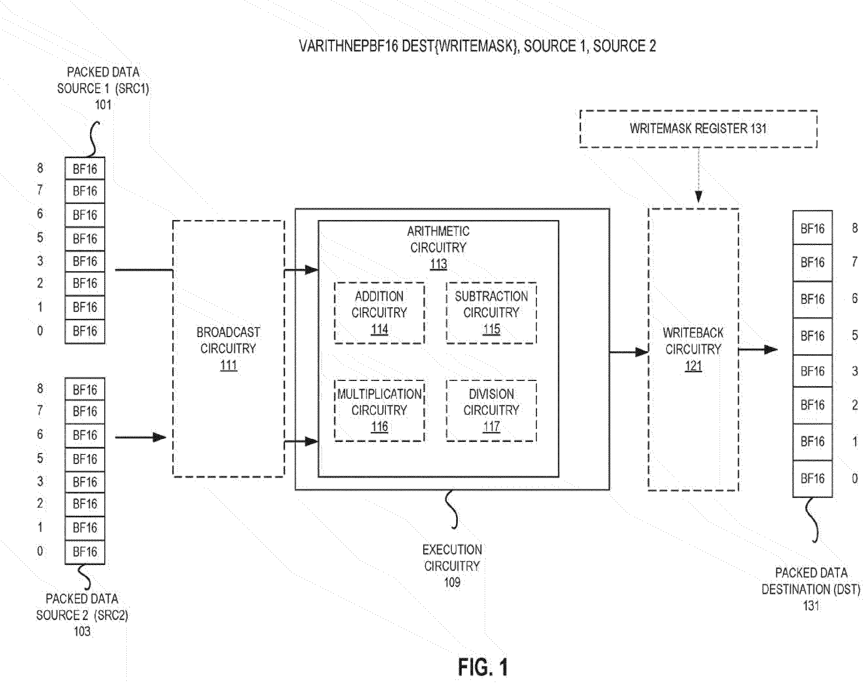

**FIG. 1** illustrates an exemplary execution of an instruction to perform an arithmetic operation on source BF16 data elements. While this illustration is in little endian format, the principles discussed herein work in big endian format. The arithmetic operation on source BF16 data elements instruction (shown here with an exemplary opcode mnemonic of V{ARITH}NEPBF16 where the arithmetic operation to be performed is noted in the {ARITH} such as ADD, SUB, DIV, or MUL) includes one or more fields to define the opcode for the instruction, one or more fields to reference or indicate packed data sources (e.g., a register or memory location), and/or one or more fields to reference or indicate a packed data destination (e.g., a register or memory location). In some embodiments, the instruction also includes one or more fields to reference or indicate a writemask or predication register that is to store writemask or predicate values as described later.

In this example, the packed data sources 101 and 103 include 8 packed data elements each of which is in BF16 format. The packed data sources 101 and 103 may be a register or a memory location. In some embodiments, when the second source 103 is a memory location, the numbers of bytes at the specified address corresponding to the length of the chosen vector register size are loaded from memory or a scalar value at the specified address is loaded from memory and broadcasted to all entries of the vector register (e.g., using broadcast circuitry 111). In some embodiments, both of those variants cause a load of a temporal vector register and then the operation proceeds as if operating on 3 vector registers. An embodiment may choose different micro-architectural for handlings the fused memory operand.

The packed data sources 101 and 103 (or temporal register variant) are fed into execution circuitry 109 to be operated on. In particular, the execution circuitry 109 performs a corresponding per data element position addition (e.g., using addition circuitry 114), multiplication (e.g., using multiplication circuitry 116), subtraction (e.g., using subtraction circuitry 115), or division (e.g., using division circuitry 117) according to the {ARITH} indication of the opcode.

In some embodiments, this execution uses a round to nearest (even) rounding mode. In some embodiments, output denormals are always flushed to zero and input denormals are always treated as zero.

The packed data destination 131 is written to store the resultant arithmetic operation in corresponding packed data elements as the packed data source 101. In some embodiments, when the instruction calls for the use of predication or writemasking, a writemask (or predicate) register 131 dictates how the resultant arithmetic operation values are stored and/or zeroed using the writemask circuitry 121.

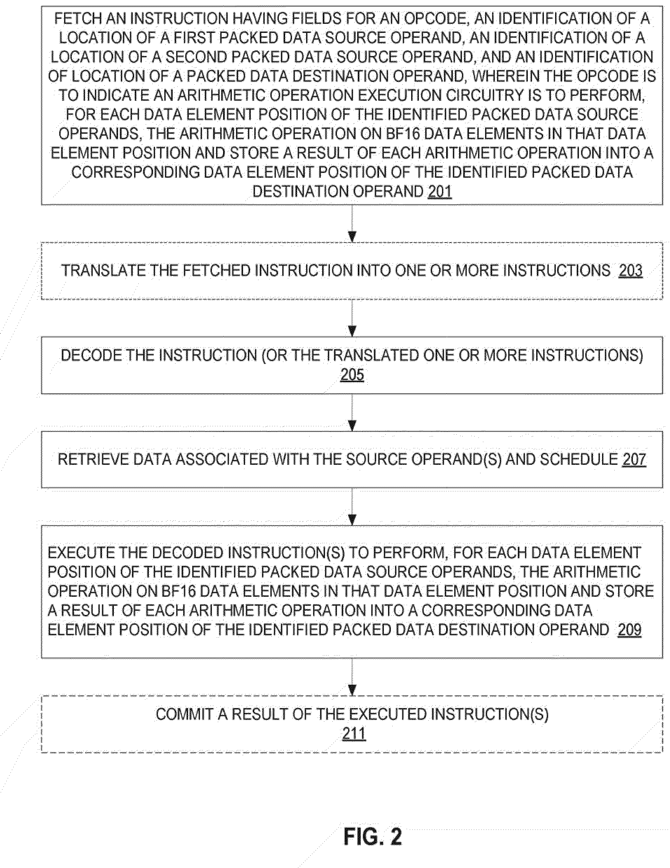

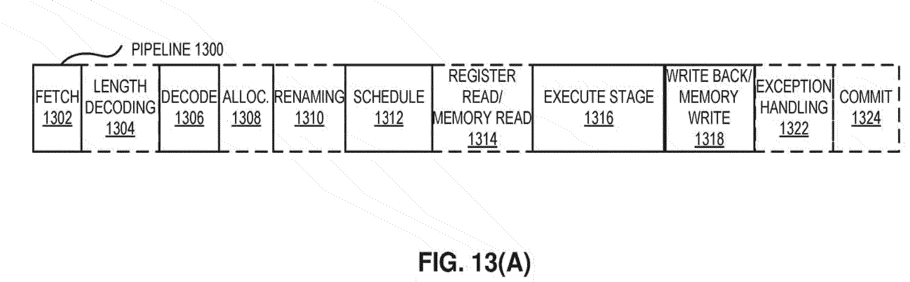

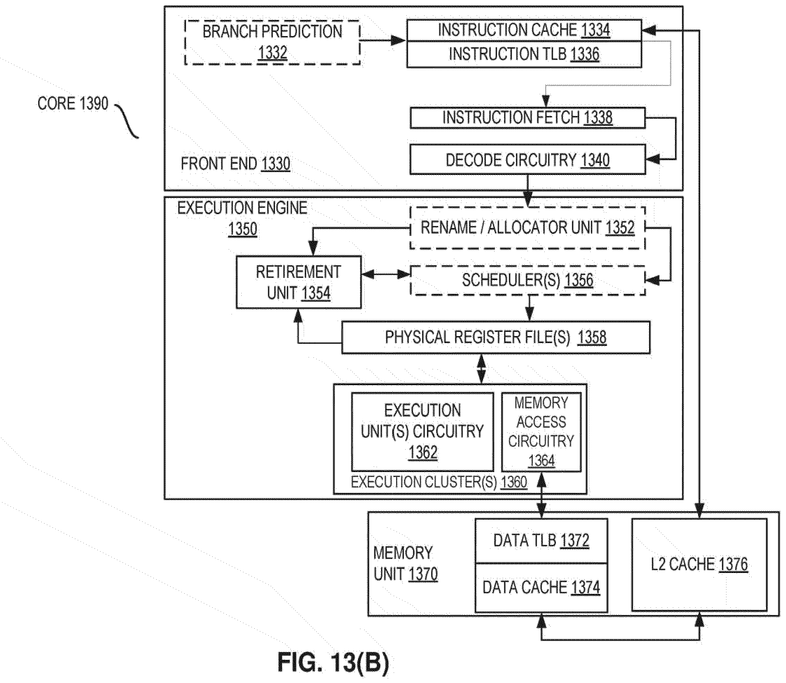

**FIG. 2** illustrates an embodiment of method performed by a processor to process a perform an arithmetic operation on BF16 data elements instruction. For example, a processor core as shown in FIG. 13(B), a pipeline as detailed below, etc. performs this method.

At 201 an instruction is fetched having fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on bf16 data elements in that data element position and store a result of each arithmetic operation into a corresponding data element position of the identified packed data destination operand.

An embodiment of a format for a perform an arithmetic operation on BF16 data elements instruction is V{ARITH}NEPBF16 DST{k}, SRC. In some embodiments, V{ARITH}NEPBF16 is the opcode mnemonic of the instruction. DST is a field for the packed data destination register operand. SRC is one or more fields for the source such as packed data register and/or memory. The source operand and destination operand may come in one or more sizes such as 128-bit, 256-bit, 512-bit, etc. The {k} is used when writemasking or predication is used.

In some embodiments, the fetched instruction, of a first ISA, is translated into one or more instructions of a second, different ISA at 203. The one or more instructions of the second, different ISA, when executed, provided the same result as if the fetched instruction had been executed. Note the translation may be performed by hardware, software, or a combination thereof.

The instruction (or the translated one or more instructions) is/are decoded 205. This decoding may cause the generation of one or more micro-operations to be performed. Note that as this instruction

Data values associated with the source operand of the decoded instruction are retrieved at 207. For example, when a source operand is stored in memory, the data from the indicated memory location is retrieved.

At 209, the decoded instruction(s) is/are executed by execution circuitry (hardware) such as that detailed herein. The execution circuitry is to perform, for each data element position of the identified packed data source operands, the arithmetic operation on bf16 data elements in that data element position and store a result of each arithmetic operation into a corresponding data element position of the identified packed data destination operand.

In some embodiments, the instruction is committed or retired at 211.

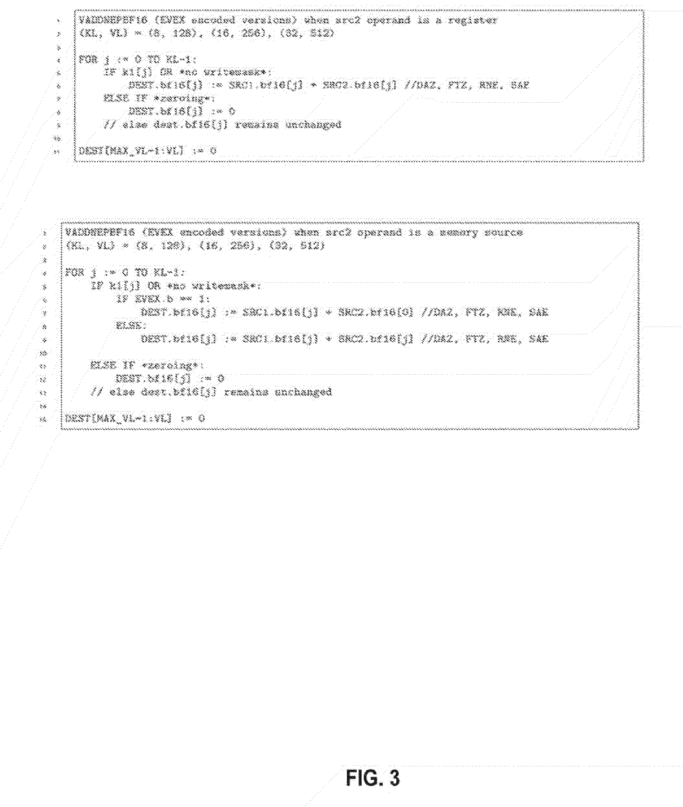

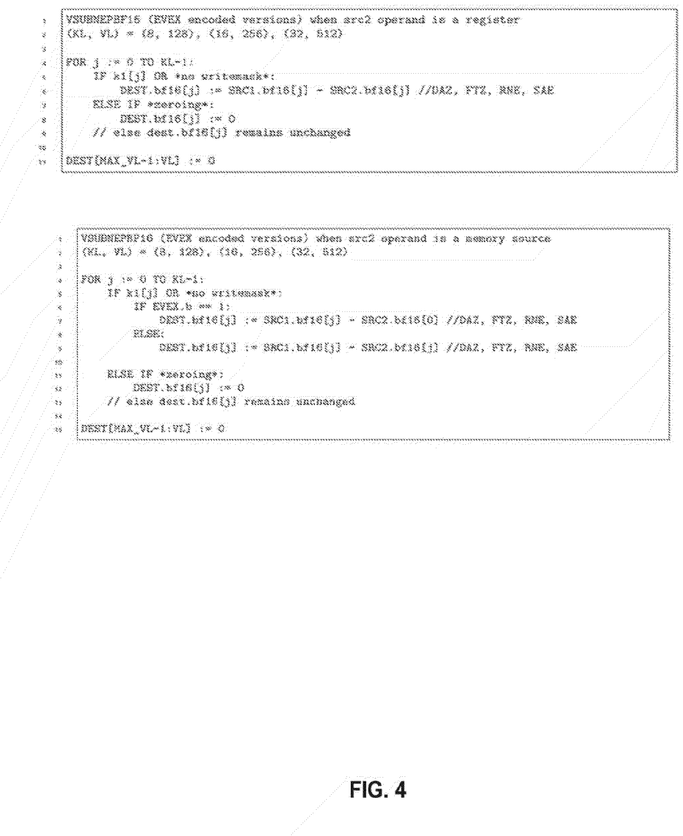

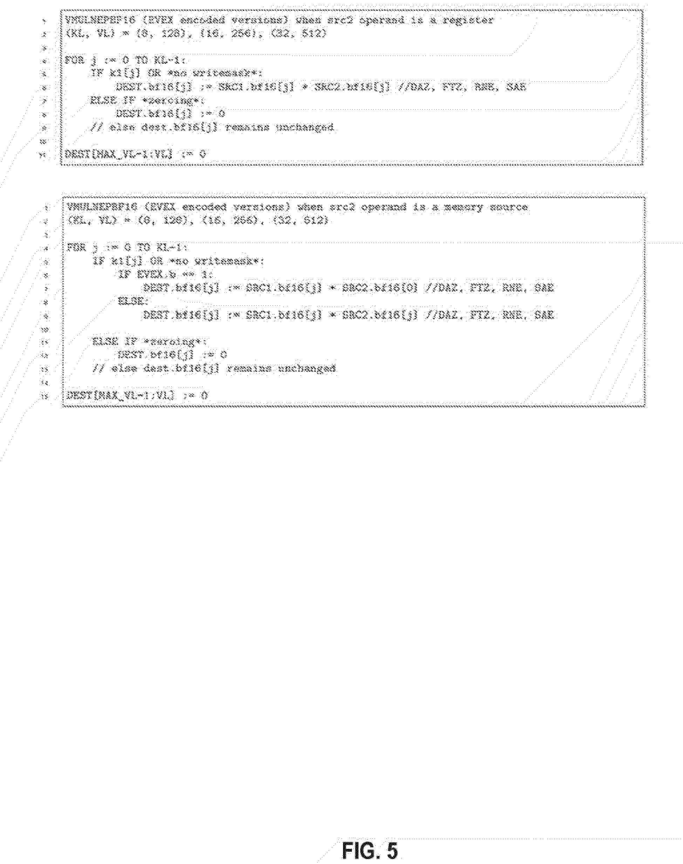

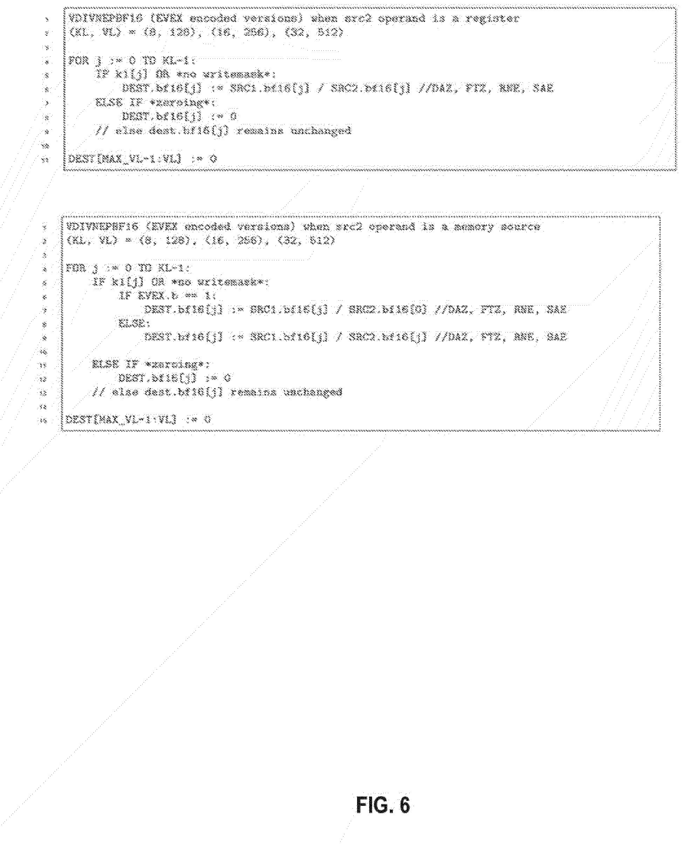

**FIGS. 3-6** illustrate exemplary embodiments of pseudo code representing the execution and format of V{ARITH}NEPBF16 instructions. Note that EVEX.b maps to the b of prefix 1601(C). The comment of DAZ, FTZ, RNE, and SAE refer to the use of support for flush-to-zero (FTZ), denormals-are-zero (DAZ), suppress all exceptions (SAE), and round-to-even (RNE) rounding.

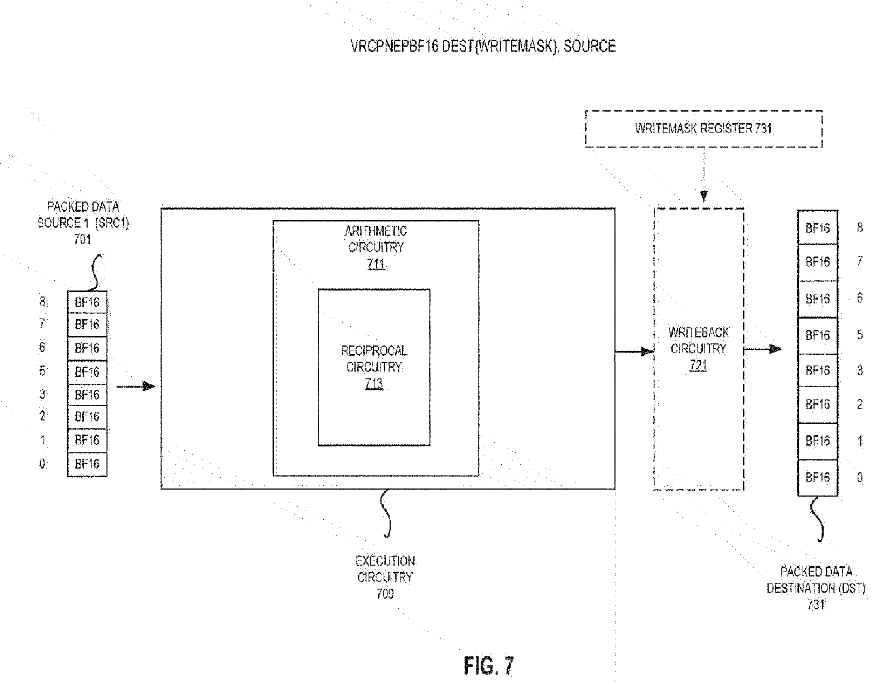

**FIG. 7** illustrates an exemplary execution of an instruction to calculate a reciprocal of BF16 data elements. While this illustration is in little endian format, the principles discussed herein work in big endian format. The reciprocal of BF16 data elements instruction (shown here with an exemplary opcode mnemonic of VRCPNEPBF16) includes one or more fields to define the opcode for the instruction, one or more fields to reference or indicate a packed data source (e.g., a register or memory location), and/or one or more fields to reference or indicate a packed data destination (e.g., a register or memory location). In some embodiments, the instruction also includes one or more fields to reference or indicate a writemask or predication register that is to store writemask or predicate values as described later.

An embodiment of a format for a calculate an approximate reciprocal of BF16 data elements instruction is VRCPNEPBF16 DST{k}, SRC. In some embodiments, VRCPNEPBF16 is the opcode mnemonic of the instruction. DST is a field for the packed data destination register operand. SRC is one or more fields for the source such as packed data register and/or memory. The source operand and destination operand may come in one or more sizes such as 128-bit, 256-bit, 512-bit, etc. The {k} is used when writemasking or predication is used.

In this example, the packed data source 701 includes 8 packed data elements each of which is in BF16 format. The packed data source 701 may be a register or a memory location.

The packed data source 701 is fed into execution circuitry 709 to be operated on. In particular, execution circuitry 709 performs a calculation of an approximate reciprocal for each of the packed data elements. In some embodiments, this execution of the instruction uses a round to nearest (even) rounding mode. In some embodiments, output denormals are always flushed to zero and input denormals are always treated as zero.

The packed data destination 731 is written to store the resultant BF16-formated approximate reciprocal in corresponding packed data elements as the packed data source 701. In some embodiments, when the instruction calls for the use of predication or writemasking, a writemask (or predicate) register 731 dictates how the resultant BF16-approximate reciprocals are stored and/or zeroed using the writemask circuitry 721.

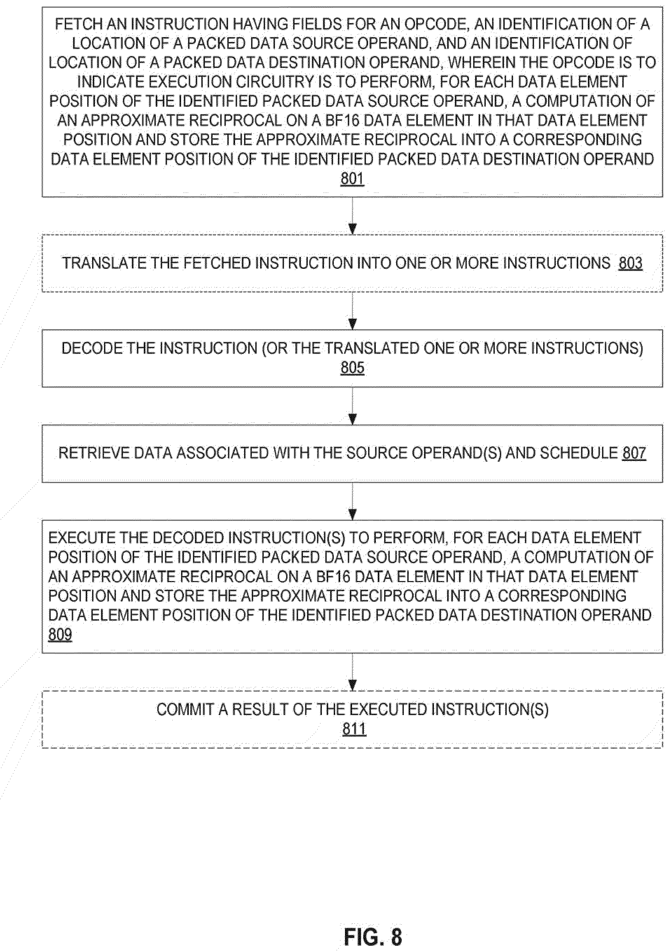

**FIG. 8** illustrates an embodiment of method performed by a processor to process a calculate an approximate reciprocal of BF16 data elements instruction. For example, a processor core as shown in FIG. 13(B), a pipeline as detailed below, etc. performs this method.

At 801 an instruction is fetched having fields for an opcode, an identification of a location of a packed data source operand, and an identification of location of a packed data destination operand, wherein the opcode is to indicate execution circuitry is to perform, for each data element position of the identified packed data source operand, a computation of an approximate reciprocal on a bf16 data element in that data element position and store the approximate reciprocal into a corresponding data element position of the identified packed data destination operand.

In some embodiments, the fetched instruction, of a first ISA, is translated into one or more instructions of a second, different ISA at 803. The one or more instructions of the second, different ISA, when executed, provided the same result as if the fetched instruction had been executed. Note the translation may be performed by hardware, software, or a combination thereof.

The instruction (or the translated one or more instructions) is/are decoded 805. This decoding may cause the generation of one or more micro-operations to be performed. Note that as this instruction

Data values associated with the source operand of the decoded instruction are retrieved at 807. For example, when a source operand is stored in memory, the data from the indicated memory location is retrieved.

At 809, the decoded instruction(s) is/are executed by execution circuitry (hardware) such as that detailed herein. The execution circuitry is to perform, for each data element position of the identified packed data source operand, a computation of an approximate reciprocal on a bf16 data element in that data element position and store the approximate reciprocal into a corresponding data element position of the identified packed data destination operand.

In some embodiments, the instruction is committed or retired at 811.

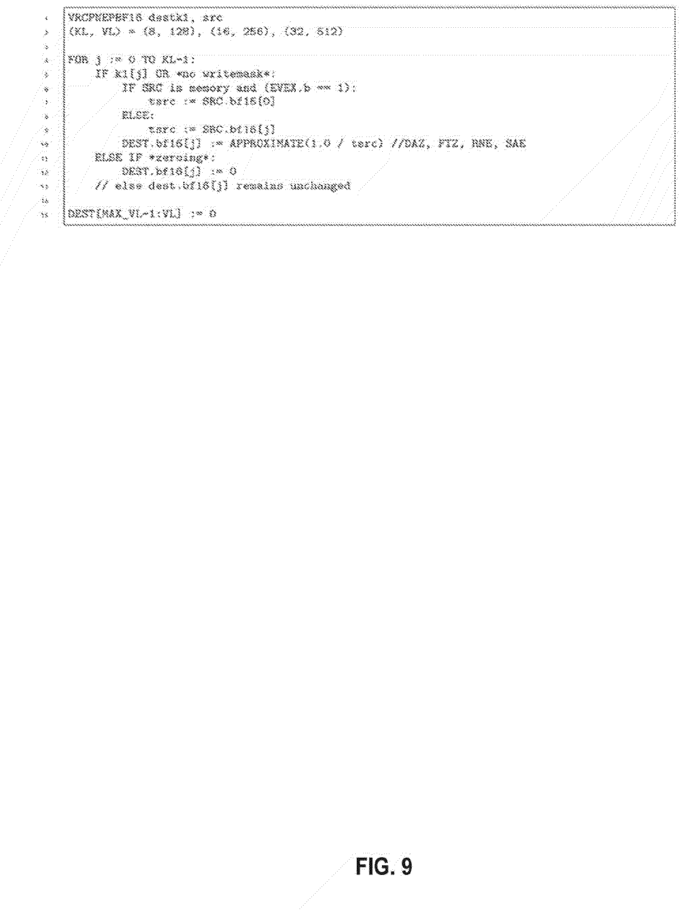

FIG. 9 illustrates exemplary embodiments of pseudo code representing the execution and format of an VRCPNEPBF16 instruction. Note that EVEX.b maps to the b of prefix 1601(C). The comment of DAZ, FTZ, RNE, and SAE refer to the use of support for flush-to-zero (FTZ), denormals-are-zero (DAZ), suppress all exceptions (SAE), and round-to-even (RNE) rounding.

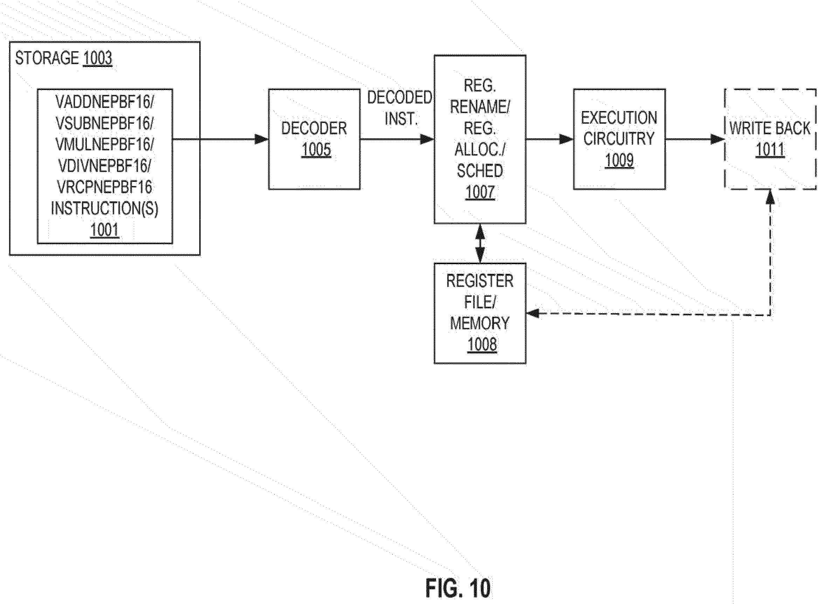

**FIG. 10** illustrates embodiments of hardware to process an instruction such as the V{ARITH}NEPBF16 and/or VRCPNEPBF16 instructions. As illustrated, storage 1003 stores a V{ARITH}NEPBF16 and/or VRCPNEPBF16 instruction 1001 to be executed.

The instruction 1001 is received by decode circuitry 1005. For example, the decode circuitry 1005 receives this instruction from fetch logic/circuitry. The instruction includes fields for an opcode, first and second sources, and a destination. In some embodiments, the sources and destination are registers, and in other embodiments one or more are memory locations. In some embodiments, the opcode details which arithmetic operation is to be performed.

More detailed embodiments of at least one instruction format will be detailed later. The decode circuitry 1005 decodes the instruction into one or more operations. In some embodiments, this decoding includes generating a plurality of micro-operations to be performed by execution circuitry (such as execution circuitry 1009). The decode circuitry 1005 also decodes instruction prefixes.

In some embodiments, register renaming, register allocation, and/or scheduling circuitry 1007 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 1008 store data as operands of the instruction to be operated on by execution circuitry 1009. Exemplary register types include packed data registers, general purpose registers, and floating-point registers.

Execution circuitry 1009 executes the decoded instruction. Exemplary detailed execution circuitry is shown in FIGS. 1, 13, etc.

In some embodiments, retirement/write back circuitry 1011 architecturally commits the result 1008 and retires the instruction.

### Exemplary Computer Architectures

Detailed below are describes of exemplary computer architectures, instruction formats, etc. that support the disclosed instructions. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

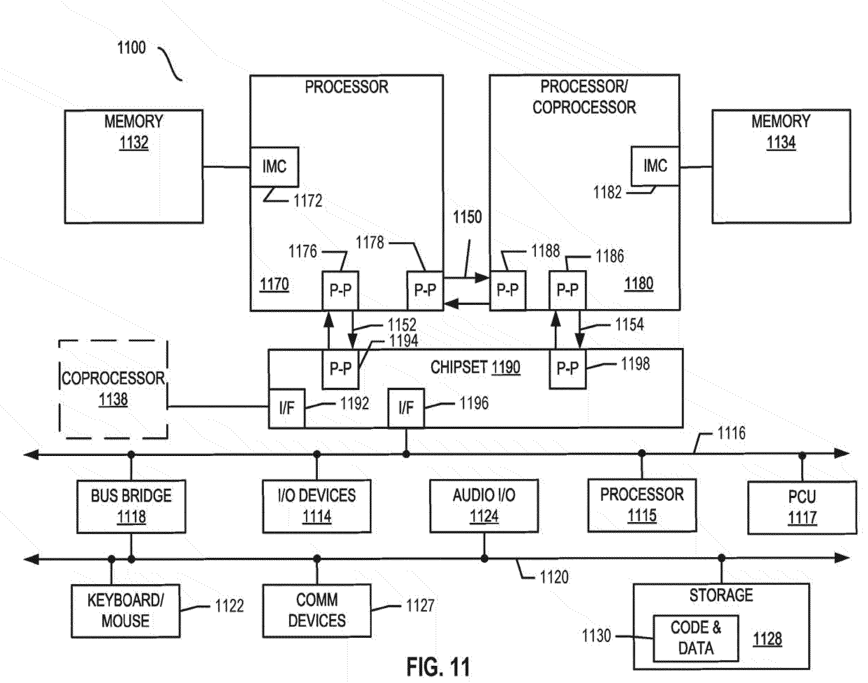

**FIG. 11** illustrates embodiments of an exemplary system. Multiprocessor system 1100 is a point-to-point interconnect system and includes a plurality of processors including a first processor 1170 and a second processor 1180 coupled via a point-to-point interconnect 1150. In some embodiments, the first processor 1170 and the second processor 1180 are homogeneous. In some embodiments, first processor 1170 and the second processor 1180 are heterogenous.

Processors 1170 and 1180 are shown including integrated memory controller (IMC) units circuitry 1172 and 1182, respectively. Processor 1170 also includes as part of its interconnect controller units point-to-point (P-P) interfaces 1176 and 1178; similarly, second processor 1180 includes P-P interfaces 1186 and 1188. Processors 1170, 1180 may exchange information via the point-to-point (P-P) interconnect 1150 using P-P interface circuits 1178, 1188. IMCs 1172 and 1182 couple the processors 1170, 1180 to respective memories, namely a memory 1132 and a memory 1134, which may be portions of main memory locally attached to the respective processors.

Processors 1170, 1180 may each exchange information with a chipset 1190 via individual P-P interconnects 1152, 1154 using point to point interface circuits 1176, 1194, 1186, 1198. Chipset 1190 may optionally exchange information with a coprocessor 1138 via a high-performance interface 1192. In some embodiments, the coprocessor 1138 is a special-purpose processor, such as, for example, a high-throughput MIC processor, a network or communication processor, compression engine, graphics processor, GPGPU, embedded processor, or the like.

A shared cache (not shown) may be included in either processor 1170, 1180 or outside of both processors, yet connected with the processors via P-P interconnect, such that either or both processors' local cache information may be stored in the shared cache if a processor is placed into a low power mode.

Chipset 1190 may be coupled to a first interconnect 1116 via an interface 1196. In some embodiments, first interconnect 1116 may be a Peripheral Component Interconnect (PCI) interconnect, or an interconnect such as a PCI Express interconnect or another I/O interconnect. In some embodiments, one of the interconnects couples to a power control unit (PCU) 1117, which may include circuitry, software, and/or firmware to perform power management operations with regard to the processors 1170, 1180 and/or co-processor 1138. PCU 1117 provides control information to a voltage regulator to cause the voltage regulator to generate the appropriate regulated voltage. PCU 1117 also provides control information to control the operating voltage generated. In various embodiments, PCU 1117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1117 is illustrated as being present as logic separate from the processor 1170 and/or processor 1180. In other cases, PCU 1117 may execute on a given one or more of cores (not shown) of processor 1170 or 1180. In some cases, PCU 1117 may be implemented as a microcontroller (dedicated or general-purpose) or other control logic configured to execute its own dedicated power management code, sometimes referred to as P-code. In yet other embodiments, power management operations to be performed by PCU 1117 may be implemented externally to a processor, such as by way of a separate power management integrated circuit (PMIC) or another component external to the processor. In yet other embodiments, power management operations to be performed by PCU 1117 may be implemented within BIOS or other system software.

Various I/O devices 1114 may be coupled to first interconnect 1116, along with an interconnect (bus) bridge 1118 which couples first interconnect 1116 to a second interconnect 1120. In some embodiments, one or more additional processor(s) 1115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 1116. In some embodiments, second interconnect 1120 may be a low pin count (LPC) interconnect. Various devices may be coupled to second interconnect 1120 including, for example, a keyboard and/or mouse 1122, communication devices 1127 and a storage unit circuitry 1128. Storage unit circuitry 1128 may be a disk drive or other mass storage device which may include instructions/code and data 1130, in some embodiments. Further, an audio I/O 1124 may be coupled to second interconnect 1120. Note that other architectures than the point-to-point architecture described above are possible. For example, instead of the point-to-point architecture, a system such as multiprocessor system 1100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

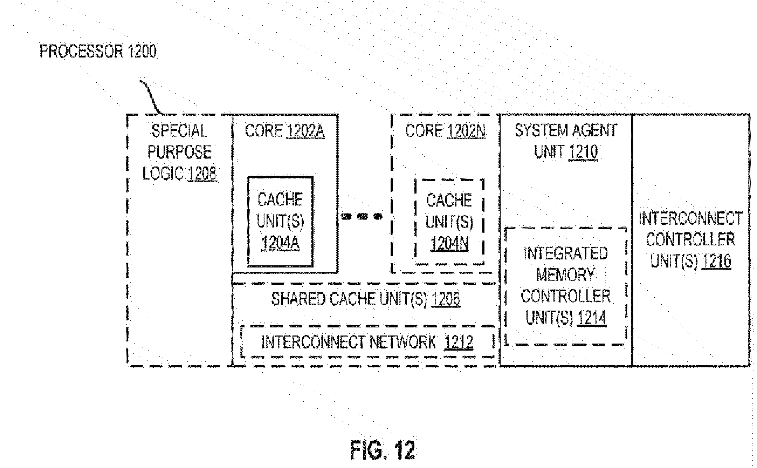

**FIG. 12** illustrates a block diagram of embodiments of a processor 1200 that may have more than one core, may have an integrated memory controller, and may have integrated graphics. The solid lined boxes illustrate a processor 1200 with a single core 1202A, a system agent 1210, a set of one or more interconnect controller units circuitry 1216, while the optional addition of the dashed lined boxes illustrates an alternative processor 1200 with multiple cores 1202(A)-(N), a set of one or more integrated memory controller unit(s) circuitry 1214 in the system agent unit circuitry 1210, and special purpose logic 1208, as well as a set of one or more interconnect controller units circuitry 1216. Note that the processor 1200 may be one of the processors 1170 or 1180, or co-processor 1138 or 1115 of **FIG. 11****.**

Thus, different implementations of the processor 1200 may include: 1) a CPU with the special purpose logic 1208 being integrated graphics and/or scientific (throughput) logic (which may include one or more cores, not shown), and the cores 1202(A)-(N) being one or more general purpose cores (e.g., general purpose in-order cores, general purpose out-of-order cores, or a combination of the two); 2) a coprocessor with the cores 1202(A)-(N) being a large number of special purpose cores intended primarily for graphics and/or scientific (throughput); and 3) a coprocessor with the cores 1202(A)-(N) being a large number of general purpose in-order cores. Thus, the processor 1200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, BiCMOS, CMOS, or NMOS.

A memory hierarchy includes one or more levels of cache unit(s) circuitry 1204(A)-(N) within the cores 1202(A)-(N), a set of one or more shared cache units circuitry 1206, and external memory (not shown) coupled to the set of integrated memory controller units circuitry 1214. The set of one or more shared cache units circuitry 1206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 1212 interconnects the special purpose logic 1208 (e.g., integrated graphics logic), the set of shared cache units circuitry 1206, and the system agent unit circuitry 1210, alternative embodiments use any number of well-known techniques for interconnecting such units. In some embodiments, coherency is maintained between one or more of the shared cache units circuitry 1206 and cores 1202(A)-(N).

In some embodiments, one or more of the cores 1202(A)-(N) are capable of multi-threading. The system agent unit circuitry 1210 includes those components coordinating and operating cores 1202(A)-(N). The system agent unit circuitry 1210 may include, for example, power control unit (PCU) circuitry and/or display unit circuitry (not shown). The PCU may be or may include logic and components needed for regulating the power state of the cores 1202(A)-(N) and/or the special purpose logic 1208 (e.g., integrated graphics logic). The display unit circuitry is for driving one or more externally connected displays.

The cores 1202(A)-(N) may be homogenous or heterogeneous in terms of architecture instruction set; that is, two or more of the cores 1202(A)-(N) may be capable of executing the same instruction set, while other cores may be capable of executing only a subset of that instruction set or a different instruction set.

### Exemplary Core Architectures

### In-order and out-of-order core block diagram

**FIG. 13(A)** is a block diagram illustrating both an exemplary in-order pipeline and an exemplary register renaming, out-of-order issue/execution pipeline according to embodiments of the invention. **FIG. 13(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 13(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 13(A)****,** a processor pipeline 1300 includes a fetch stage 1302, an optional length decode stage 1304, a decode stage 1306, an optional allocation stage 1308, an optional renaming stage 1310, a scheduling (also known as a dispatch or issue) stage 1312, an optional register read/memory read stage 1314, an execute stage 1316, a write back/memory write stage 1318, an optional exception handling stage 1322, and an optional commit stage 1324. One or more operations can be performed in each of these processor pipeline stages. For example, during the fetch stage 1302, one or more instructions are fetched from instruction memory, during the decode stage 1306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 1306 and the register read/memory read stage 1314 may be combined into one pipeline stage. In one embodiment, during the execute stage 1316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 1300 as follows: 1) the instruction fetch 1338 performs the fetch and length decoding stages 1302 and 1304; 2) the decode unit circuitry 1340 performs the decode stage 1306; 3) the rename/allocator unit circuitry 1352 performs the allocation stage 1308 and renaming stage 1310; 4) the scheduler unit(s) circuitry 1356 performs the schedule stage 1312; 5) the physical register file(s) unit(s) circuitry 1358 and the memory unit circuitry 1370 perform the register read/memory read stage 1314; the execution cluster 1360 perform the execute stage 1316; 6) the memory unit circuitry 1370 and the physical register file(s) unit(s) circuitry 1358 perform the write back/memory write stage 1318; 7) various units (unit circuitry) may be involved in the exception handling stage 1322; and 8) the retirement unit circuitry 1354 and the physical register file(s) unit(s) circuitry 1358 perform the commit stage 1324.

**FIG. 13(B)** shows processor core 1390 including front-end unit circuitry 1330 coupled to an execution engine unit circuitry 1350, and both are coupled to a memory unit circuitry 1370. The core 1390 may be a reduced instruction set computing (RISC) core, a complex instruction set computing (CISC) core, a very long instruction word (VLIW) core, or a hybrid or alternative core type. As yet another option, the core 1390 may be a special-purpose core, such as, for example, a network or communication core, compression engine, coprocessor core, general purpose computing graphics processing unit (GPGPU) core, graphics core, or the like.

The front end unit circuitry 1330 may include branch prediction unit circuitry 1332 coupled to an instruction cache unit circuitry 1334, which is coupled to an instruction translation lookaside buffer (TLB) 1336, which is coupled to instruction fetch unit circuitry 1338, which is coupled to decode unit circuitry 1340. In one embodiment, the instruction cache unit circuitry 1334 is included in the memory unit circuitry 1370 rather than the front-end unit circuitry 1330. The decode unit circuitry 1340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 1340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 1340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1390 includes a microcode ROM (not shown) or other medium that stores microcode for certain macroinstructions (e.g., in decode unit circuitry 1340 or otherwise within the front end unit circuitry 1330). In one embodiment, the decode unit circuitry 1340 includes a micro-operation (micro-op) or operation cache (not shown) to hold/cache decoded operations, micro-tags, or micro-operations generated during the decode or other stages of the processor pipeline 1300. The decode unit circuitry 1340 may be coupled to rename/allocator unit circuitry 1352 in the execution engine unit circuitry 1350.

The execution engine circuitry 1350 includes the rename/allocator unit circuitry 1352 coupled to a retirement unit circuitry 1354 and a set of one or more scheduler(s) circuitry 1356. The scheduler(s) circuitry 1356 represents any number of different schedulers, including reservations stations, central instruction window, etc. In some embodiments, the scheduler(s) circuitry 1356 can include arithmetic logic unit (ALU) scheduler/scheduling circuitry, ALU queues, arithmetic generation unit (AGU) scheduler/scheduling circuitry, AGU queues, etc. The scheduler(s) circuitry 1356 is coupled to the physical register file(s) circuitry 1358. Each of the physical register file(s) circuitry 1358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 1358 includes vector registers unit circuitry, writemask registers unit circuitry, and scalar register unit circuitry. These register units may provide architectural vector registers, vector mask registers, general-purpose registers, etc. The physical register file(s) unit(s) circuitry 1358 is overlapped by the retirement unit circuitry 1354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1354 and the physical register file(s) circuitry 1358 are coupled to the execution cluster(s) 1360. The execution cluster(s) 1360 includes a set of one or more execution units circuitry 1362 and a set of one or more memory access circuitry 1364. The execution units circuitry 1362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 1356, physical register file(s) unit(s) circuitry 1358, and execution cluster(s) 1360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 1364). It should also be understood that where separate pipelines are used, one or more of these pipelines may be out-of-order issue/execution and the rest in-order.

In some embodiments, the execution engine unit circuitry 1350 may perform load store unit (LSU) address/data pipelining to an Advanced Microcontroller Bus (AHB) interface (not shown), and address phase and writeback, data phase load, store, and branches.

The set of memory access circuitry 1364 is coupled to the memory unit circuitry 1370, which includes data TLB unit circuitry 1372 coupled to a data cache circuitry 1374 coupled to a level 2 (L2) cache circuitry 1376. In one exemplary embodiment, the memory access units circuitry 1364 may include a load unit circuitry, a store address unit circuit, and a store data unit circuitry, each of which is coupled to the data TLB circuitry 1372 in the memory unit circuitry 1370. The instruction cache circuitry 1334 is further coupled to a level 2 (L2) cache unit circuitry 1376 in the memory unit circuitry 1370. In one embodiment, the instruction cache 1334 and the data cache 1374 are combined into a single instruction and data cache (not shown) in L2 cache unit circuitry 1376, a level 3 (L3) cache unit circuitry (not shown), and/or main memory. The L2 cache unit circuitry 1376 is coupled to one or more other levels of cache and eventually to a main memory.

The core 1390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 1390 includes logic to support a packed data instruction set extension (e.g., AVX1, AVX2), thereby allowing the operations used by many multimedia applications to be performed using packed data.

### Exemplary Execution Unit(s) Circuitry

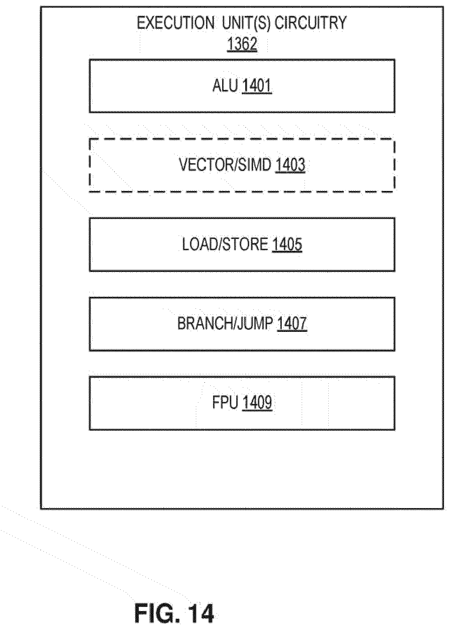

**FIG. 14** illustrates embodiments of execution unit(s) circuitry, such as execution unit(s) circuitry 1362 of FIG. 13(B). As illustrated, execution unit(s) circuity 1362 may include one or more ALU circuits 1401, vector/SIMD unit circuits 1403, load/store unit circuits 1405, and/or branch/jump unit circuits 1407. ALU circuits 1401 perform integer arithmetic and/or Boolean operations. Vector/SIMD unit circuits 1403 perform vector/SIMD operations on packed data (such as SIMD/vector registers). Load/store unit circuits 1405 execute load and store instructions to load data from memory into registers or store from registers to memory. Load/store unit circuits 1405 may also generate addresses. Branch/jump unit circuits 1407 cause a branch or jump to a memory address depending on the instruction. Floating-point unit (FPU) circuits 1409 perform floating-point arithmetic. The width of the execution unit(s) circuitry 1362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

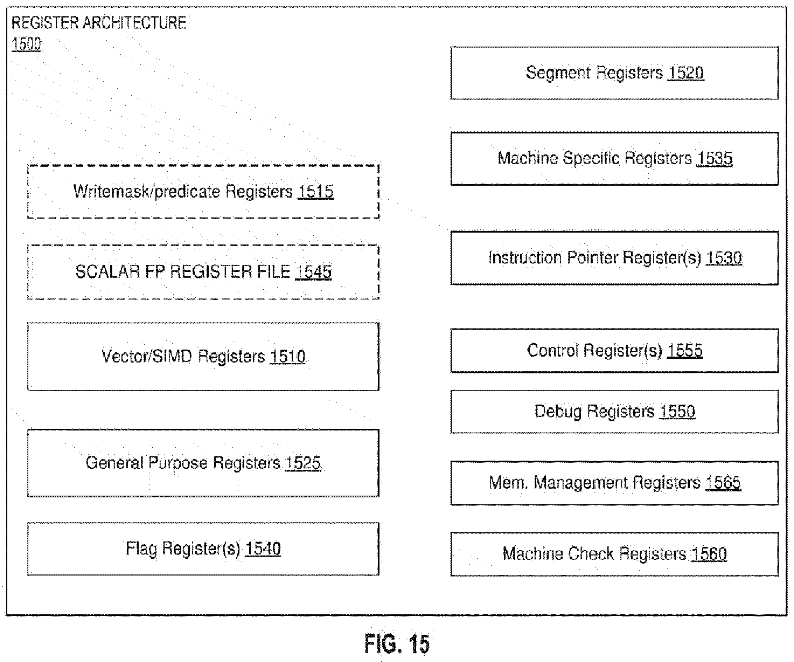

**FIG. 15** is a block diagram of a register architecture 1500 according to some embodiments. As illustrated, there are vector/SIMD registers 1510 that vary from 128-bit to 1,024 bits width. In some embodiments, the vector/SIMD registers 1510 are physically 512-bits and, depending upon the mapping, only some of the lower bits are used. For example, in some embodiments, the vector/SIMD registers 1510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1500 includes writemask/predicate registers 1515. For example, in some embodiments, there are 8 writemask/predicate registers (sometimes called k0 through k7) that are each 16-bit, 32-bit, 64-bit, or 128-bit in size. Writemask/predicate registers 1515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1515 corresponds to a data element position of the destination. In other embodiments, the writemask/predicate registers 1515 are scalable and consists of a set number of enable bits for a given vector element (e.g., 8 enable bits per 64-bit vector element).

The register architecture 1500 includes a plurality of general-purpose registers 1525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1500 includes scalar floating-point register 1545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 1540 (e.g., EFLAGS, RFLAGS, etc.) store status and control information for arithmetic, compare, and system operations. For example, the one or more flag registers 1540 may store condition code information such as carry, parity, auxiliary carry, zero, sign, and overflow. In some embodiments, the one or more flag registers 1540 are called program status and control registers.

Segment registers 1520 contain segment points for use in accessing memory. In some embodiments, these registers are referenced by the names CS, DS, SS, ES, FS, and GS.

Machine specific registers (MSRs) 1535 control and report on processor performance. Most MSRs 1535 handle system-related functions and are not accessible to an application program. Machine check registers 1560 consist of control, status, and error reporting MSRs that are used to detect and report on hardware errors.

One or more instruction pointer register(s) 1530 store an instruction pointer value. Control register(s) 1555 (e.g., CR0-CR4) determine the operating mode of a processor (e.g., processor 1170, 1180, 1138, 1115, and/or 1200) and the characteristics of a currently executing task. Debug registers 1550 control and allow for the monitoring of a processor or core's debugging operations.

Memory management registers 1565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (sourcel/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

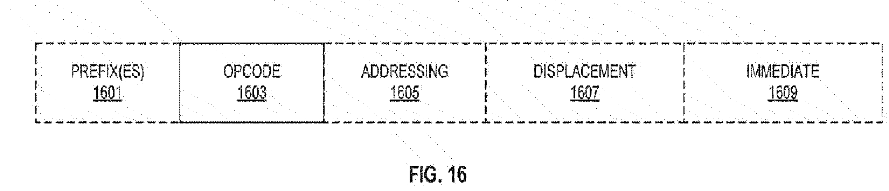

**FIG. 16** illustrates embodiments of an instruction format. As illustrated, an instruction may include multiple components including, but not limited to, one or more fields for: one or more prefixes 1601, an opcode 1603, addressing information 1605 (e.g., register identifiers, memory addressing information, etc.), a displacement value 1607, and/or an immediate 1609. Note that some instructions utilize some or all of the fields of the format whereas others may only use the field for the opcode 1603. In some embodiments, the order illustrated is the order in which these fields are to be encoded, however, it should be appreciated that in other embodiments these fields may be encoded in a different order, combined, etc.

The prefix(es) field(s) 1601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1603 is used to at least partially define the operation to be performed upon a decoding of the instruction. In some embodiments, a primary opcode encoded in the opcode field 1603 is 1, 2, or 3 bytes in length. In other embodiments, a primary opcode can be a different length. An additional 3-bit opcode field is sometimes encoded in another field.

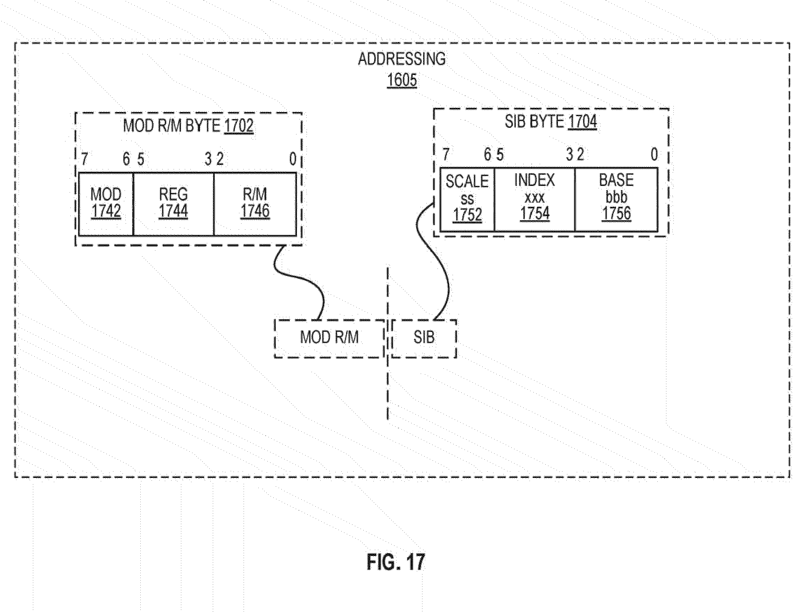

The addressing field 1605 is used to address one or more operands of the instruction, such as a location in memory or one or more registers. **FIG. 17** illustrates embodiments of the addressing field 1605. In this illustration, an optional ModR/M byte 1702 and an optional Scale, Index, Base (SIB) byte 1704 are shown. The ModR/M byte 1702 and the SIB byte 1704 are used to encode up to two operands of an instruction, each of which is a direct register or effective memory address. Note that each of these fields are optional in that not all instructions include one or more of these fields. The MOD R/M byte 1702 includes a MOD field 1742, a register field 1744, and R/M field 1746.

The content of the MOD field 1742 distinguishes between memory access and non-memory access modes. In some embodiments, when the MOD field 1742 has a value of b11, a register-direct addressing mode is utilized, and otherwise register-indirect addressing is used.

The register field 1744 may encode either the destination register operand or a source register operand, or may encode an opcode extension and not be used to encode any instruction operand. The content of register index field 1744, directly or through address generation, specifies the locations of a source or destination operand (either in a register or in memory). In some embodiments, the register field 1744 is supplemented with an additional bit from a prefix (e.g., prefix 1601) to allow for greater addressing.

The R/M field 1746 may be used to encode an instruction operand that references a memory address, or may be used to encode either the destination register operand or a source register operand. Note the R/M field 1746 may be combined with the MOD field 1742 to dictate an addressing mode in some embodiments.

The SIB byte 1704 includes a scale field 1752, an index field 1754, and a base field 1756 to be used in the generation of an address. The scale field 1752 indicates scaling factor. The index field 1754 specifies an index register to use. In some embodiments, the index field 1754 is supplemented with an additional bit from a prefix (e.g., prefix 1601) to allow for greater addressing. The base field 1756 specifies a base register to use. In some embodiments, the base field 1756 is supplemented with an additional bit from a prefix (e.g., prefix 1601) to allow for greater addressing. In practice, the content of the scale field 1752 allows for the scaling of the content of the index field 1754 for memory address generation (e.g., for address generation that uses 2^{scale ∗} index + base).

Some addressing forms utilize a displacement value to generate a memory address. For example, a memory address may be generated according to 2^{scale ∗} index + base + displacement, index^{∗}scale+displacement, r/m + displacement, instruction pointer (RIP/EIP) + displacement, register + displacement, etc. The displacement may be a 1-byte, 2-byte, 4-byte, etc. value. In some embodiments, a displacement field 1607 provides this value. Additionally, in some embodiments, a displacement factor usage is encoded in the MOD field of the addressing field 1605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1607.

In some embodiments, an immediate field 1609 specifies an immediate for the instruction. An immediate may be encoded as a 1-byte value, a 2-byte value, a 4-byte value, etc.

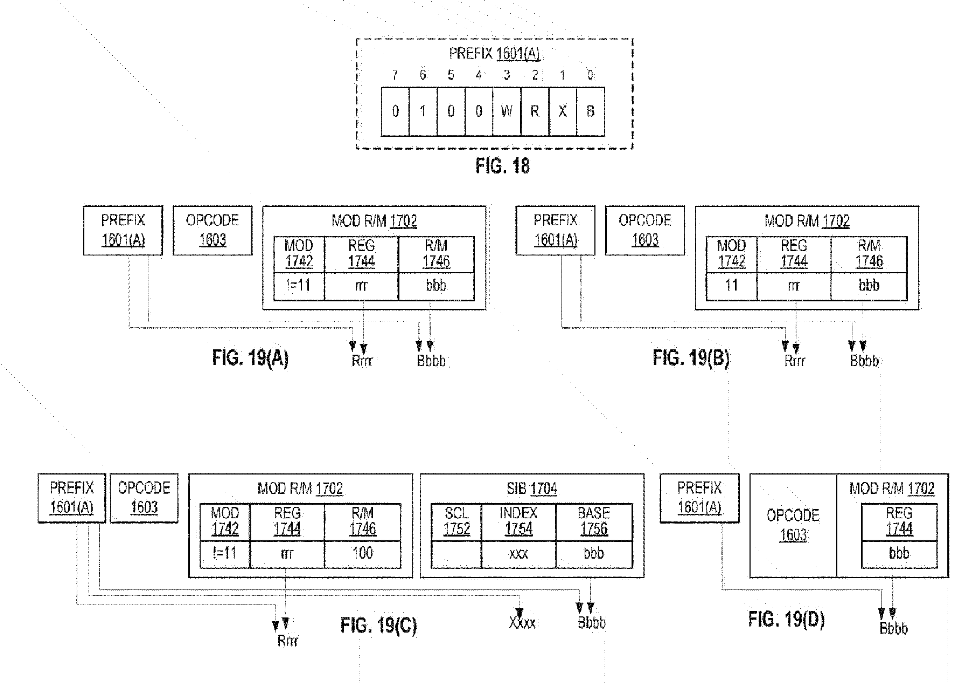

**FIG. 18** illustrates embodiments of a first prefix 1601(A). In some embodiments, the first prefix 1601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1601(A) may specify up to three registers using 3-bit fields depending on the format: 1) using the reg field 1744 and the R/M field 1746 of the Mod R/M byte 1702; 2) using the Mod R/M byte 1702 with the SIB byte 1704 including using the reg field 1744 and the base field 1756 and index field 1754; or 3) using the register field of an opcode.

In the first prefix 1601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1744 and MOD R/M R/M field 1746 alone can each only address 8 registers.

In the first prefix 1601(A), bit position 2 (R) may an extension of the MOD R/M reg field 1744 and may be used to modify the ModR/M reg field 1744 when that field encodes a general purpose register, a 64-bit packed data register (e.g., a SSE register), or a control or debug register. R is ignored when Mod R/M byte 1702 specifies other registers or defines an extended opcode.

Bit position 1 (X) X bit may modify the SIB byte index field 1754.

Bit position B (B) B may modify the base in the Mod R/M R/M field 1746 or the SIB byte base field 1756; or it may modify the opcode register field used for accessing general purpose registers (e.g., general purpose registers 1525).

**FIGS. 19(A)****-(D)** illustrate embodiments of how the R, X, and B fields of the first prefix 1601(A) are used. **FIG. 19(A)** illustrates R and B from the first prefix 1601(A) being used to extend the reg field 1744 and R/M field 1746 of the MOD R/M byte 1702 when the SIB byte 17 04 is not used for memory addressing. **FIG. 19(B)** illustrates R and B from the first prefix 1601(A) being used to extend the reg field 1744 and R/M field 1746 of the MOD R/M byte 1702 when the SIB byte 17 04 is not used (register-register addressing). **FIG. 19(C)** illustrates R, X, and B from the first prefix 1601(A) being used to extend the reg field 1744 of the MOD R/M byte 1702 and the index field 1754 and base field 1756 when the SIB byte 17 04 being used for memory addressing. **FIG. 19(D)** illustrates B from the first prefix 1601(A) being used to extend the reg field 1744 of the MOD R/M byte 1702 when a register is encoded in the opcode 1603.

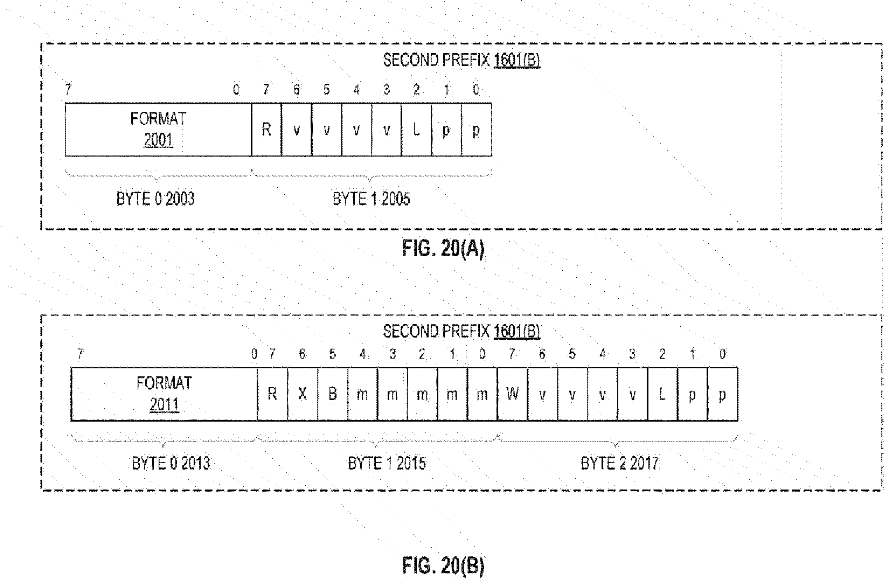

**FIGS. 20(A)****-(B)** illustrate embodiments of a second prefix 1601(B). In some embodiments, the second prefix 1601(B) is an embodiment of a VEX prefix. The second prefix 1601(B) encoding allows instructions to have more than two operands, and allows SIMD vector registers (e.g., vector/SIMD registers 1510) to be longer than 64-bits (e.g., 128-bit and 256-bit). The use of the second prefix 1601(B) provides for three-operand (or more) syntax. For example, previous two-operand instructions performed operations such as A = A + B, which overwrites a source operand. The use of the second prefix 1601(B) enables operands to perform nondestructive operations such as A = B + C.

In some embodiments, the second prefix 1601(B) comes in two forms - a two-byte form and a three-byte form. The two-byte second prefix 1601(B) is used mainly for 128-bit, scalar, and some 256-bit instructions; while the three-byte second prefix 1601(B) provides a compact replacement of the first prefix 1601(A) and 3-byte opcode instructions.

**FIG. 20(A)** illustrates embodiments of a two-byte form of the second prefix 1601(B). In one example, a format field 2001 (byte 0 2003) contains the value C5H. In one example, byte 1 2005 includes a "R" value in bit[7]. This value is the complement of the same value of the first prefix 1601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1746 to encode the instruction operand that references a memory address or encode either the destination register operand or a source register operand.

Instructions that use this prefix may use the Mod R/M reg field 1744 to encode either the destination register operand or a source register operand, be treated as an opcode extension and not used to encode any instruction operand.

For instruction syntax that support four operands, vvvv, the Mod R/M R/M field 1746 and the Mod R/M reg field 1744 encode three of the four operands. Bits[7:4] of the immediate 1609 are then used to encode the third source register operand.

**FIG. 20(B)** illustrates embodiments of a three-byte form of the second prefix 1601(B). in one example, a format field 2011 (byte 0 2013) contains the value C4H. Byte 1 2015 includes in bits[7:5] "R," "X," and "B" which are the complements of the same values of the first prefix 1601(A). Bits[4:0] of byte 1 2015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 2017 is used similar to W of the first prefix 1601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1746 to encode the instruction operand that references a memory address or encode either the destination register operand or a source register operand.

Instructions that use this prefix may use the Mod R/M reg field 1744 to encode either the destination register operand or a source register operand, be treated as an opcode extension and not used to encode any instruction operand.

For instruction syntax that support four operands, vvvv, the Mod R/M R/M field 1746, and the Mod R/M reg field 1744 encode three of the four operands. Bits[7:4] of the immediate 1609 are then used to encode the third source register operand.

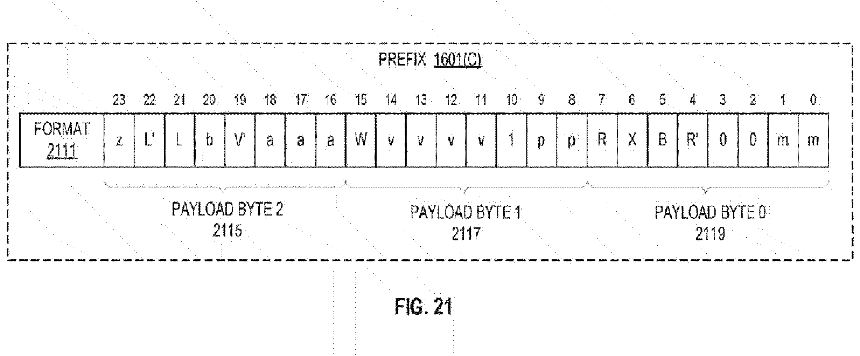

**FIG. 21** illustrates embodiments of a third prefix 1601(C). In some embodiments, the first prefix 1601(A) is an embodiment of an EVEX prefix. The third prefix 1601(C) is a four-byte prefix.

The third prefix 1601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 15) or predication utilize this prefix. Opmask register allow for conditional processing or selection control. Opmask instructions, whose source/destination operands are opmask registers and treat the content of an opmask register as a single value, are encoded using the second prefix 1601(B).

The third prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1601(C) is a format field 2111 that has a value, in one example, of 62H. Subsequent bytes are referred to as payload bytes 2115-2119 and collectively form a 24-bit value of P[23:0] providing specific capability in the form of one or more fields (detailed herein).

In some embodiments, P[1:0] of payload byte 2119 are identical to the low two mmmmm bits. P[3:2] are reserved in some embodiments. Bit P[4] (R') allows access to the high 16 vector register set when combined with P[7] and the ModR/M reg field 1744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1744 and ModR/M R/M field 1746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1601(A) and second prefix 1611(B) and may serve as an opcode extension bit or operand size promotion.

P[18:16] specify the index of a register in the opmask (writemask) registers (e.g., writemask/predicate registers 1515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 1601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **vvvv** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **vvvv** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **vvvv** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

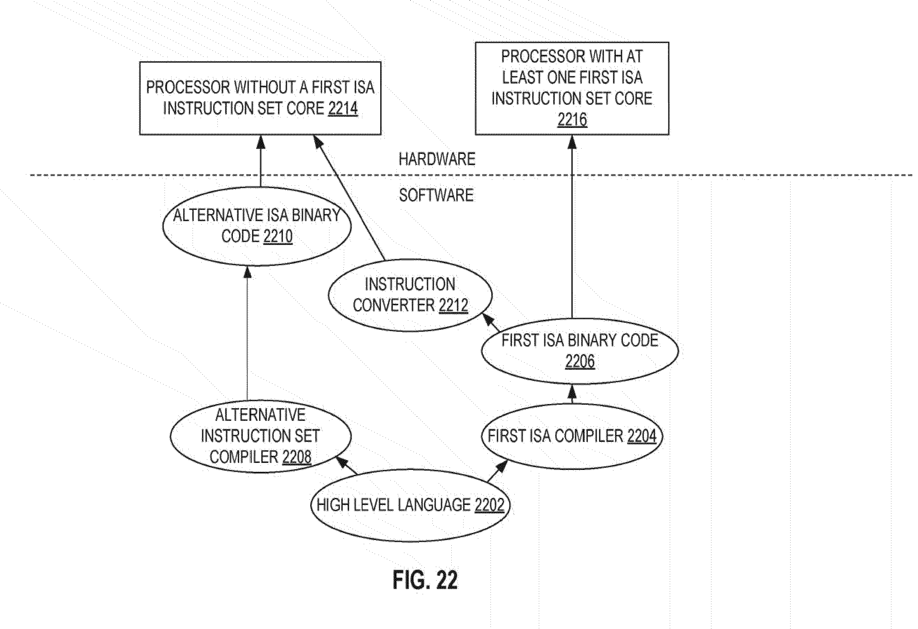

**FIG. 22** illustrates a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **FIG. 22** shows a program in a high-level language 2202 may be compiled using a first ISA compiler 2204 to generate first ISA binary code 2206 that may be natively executed by a processor with at least one first instruction set core 2216. The processor with at least one first ISA instruction set core 2216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 2204 represents a compiler that is operable to generate first ISA binary code 2206 (e.g., object code) that can, with or without additional linkage processing, be executed on the processor with at least one first ISA instruction set core 2216. Similarly, **FIG. 22** shows the program in the high-level language 2202 may be compiled using an alternative instruction set compiler 2208 to generate alternative instruction set binary code 2210 that may be natively executed by a processor without a first ISA instruction set core 2214. The instruction converter 2212 is used to convert the first ISA binary code 2206 into code that may be natively executed by the processor without a first ISA instruction set core 2214. This converted code is not likely to be the same as the alternative instruction set binary code 2210 because an instruction converter capable of this is difficult to make; however, the converted code will accomplish the general operation and be made up of instructions from the alternative instruction set. Thus, the instruction converter 2212 represents software, firmware, hardware, or a combination thereof that, through emulation, simulation or any other process, allows a processor or other electronic device that does not have a first ISA instruction set processor or core to execute the first ISA binary code 2206.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

Examples utilizing BF16 data elements include, but are not limited to:
1. An apparatus comprising:
   decode circuitry to decode an instance of a single instruction, the single instruction to include fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on BF16 data elements in that data element position in BF16 format and store a result of each arithmetic operation into a corresponding data element position of the identified packed data destination operand; and
   the execution circuitry to execute the decoded instruction according to the opcode.
2. The apparatus of example 1, wherein the field for the identification of the first source operand is to identify a vector register.
3. The apparatus of example 1, wherein the field for the identification of the first source operand is to identify a memory location.
4. The apparatus of example 1, wherein the arithmetic operation is addition.
5. The apparatus of example 1, wherein the arithmetic operation is multiplication.
6. The apparatus of example 1, wherein the arithmetic operation is division.
7. The apparatus of example 1, wherein the arithmetic operation is subtraction.
8. A system comprising:
   memory to store an instance of a single instruction;
   decode circuitry to decode the instance of the single instruction, the single instruction to include fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on BF16 data elements in that data element position in BF16 format and store a result of each arithmetic operation into a corresponding data element position of the identified packed data destination operand; and
   the execution circuitry to execute the decoded instruction according to the opcode.
9. The system of example 8, wherein the field for the identification of the first source operand is to identify a vector register.
10. The system of example 8, wherein the field for the identification of the first source operand is to identify a memory location.
11. The system of example 8, wherein the arithmetic operation is addition.
12. The system of example 8, wherein the arithmetic operation is multiplication.
13. The system of example 8, wherein the arithmetic operation is division.
14. The system of example 8, wherein the arithmetic operation is subtraction.
15. A method comprising:
   decoding an instance of a single instruction, the single instruction to include fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on BF16 data elements in that data element position in BF16 format and store a result of each arithmetic operation into a corresponding data element position of the identified packed data destination operand; and
   executing the decoded instruction according to the opcode.
16. The method of example 15, wherein the arithmetic operation is addition.
17. The method of example 15, wherein the arithmetic operation is multiplication.
18. The method of example 15, wherein the arithmetic operation is division.
19. The method of example 15, wherein the arithmetic operation is subtraction.
20. The method of example 15, further comprising:
   translating the single instruction to one or more instructions of a different instruction set architecture, wherein the executing the decoded instruction according to the opcode comprises executing the one or more instructions of the different instruction set architecture.
21. An apparatus comprising:
   decode circuitry to decode an instance of a single instruction, the single instruction to include fields for an opcode, an identification of a location of a packed data source operand, and an identification of location of a packed data destination operand, wherein the opcode is to indicate execution circuitry is to perform, for each data element position of the identified packed data source operand, a computation of an approximate reciprocal on a bf16 data element in that data element position and store the approximate reciprocal into a corresponding data element position of the identified packed data destination operand; and
   the execution circuitry to execute the decoded instruction according to the opcode.
22. The apparatus of example 21, wherein the field for the identification of the first source operand is to identify a vector register.
23. The apparatus of example 21, wherein the field for the identification of the first source operand is to identify a memory location.
24. A system comprising:
   memory to store an instance of a single instruction;
   decode circuitry to decode the instance of the single instruction, the single instruction to include fields for an opcode, an identification of a location of a packed data source operand, and an identification of location of a packed data destination operand, wherein the opcode is to indicate execution circuitry is to perform, for each data element position of the identified packed data source operand, a computation of an approximate reciprocal on a bf16 data element in that data element position and store the approximate reciprocal into a corresponding data element position of the identified packed data destination operand; and
   the execution circuitry to execute the decoded instruction according to the opcode.
25. The system of example 24, wherein the field for the identification of the first source operand is to identify a vector register.
26. The system of example 24, wherein the field for the identification of the first source operand is to identify a memory location.
27. A method comprising:
   decoding an instance of a single instruction, the single instruction to include fields for an opcode, an identification of a location of a packed data source operand, and an identification of location of a packed data destination operand, wherein the opcode is to indicate execution circuitry is to perform, for each data element position of the identified packed data source operand, a computation of an approximate reciprocal on a bf16 data element in that data element position and store the approximate reciprocal into a corresponding data element position of the identified packed data destination operand; and
   executing the decoded instruction according to the opcode.
28. The method of example 27, further comprising:
   translating the single instruction to one or more instructions of a different instruction set architecture, wherein the executing the decoded instruction according to the opcode comprises executing the one or more instructions of the different instruction set architecture.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decode means to decode an instance of a single instruction, the single instruction to include fields for an opcode, an identification of a location of a first packed data source operand, an identification of a location of a second packed data source operand, and an identification of location of a packed data destination operand, wherein the opcode is to indicate an arithmetic operation execution means is to perform, for each data element position of the identified packed data source operands, the arithmetic operation on BF16 data elements in that data element position in BF16 format and store a result of each arithmetic operation into a corresponding data element position of the identified packed data destination operand; and
the execution means to execute the decoded instruction according to the opcode.

2. The apparatus of claim 1, wherein the field for the identification of the first source operand is to identify a vector register.

3. The apparatus of claim 1, wherein the field for the identification of the first source operand is to identify a memory location.

4. The apparatus of claim 1, wherein the arithmetic operation is addition.

5. The apparatus of claim 1, wherein the arithmetic operation is multiplication.

6. The apparatus of claim 1, wherein the arithmetic operation is division.

7. The apparatus of claim 1, wherein the arithmetic operation is subtraction.

8. A method comprising:
decoding an instance of a single instruction, the single instruction to include fields for an opcode, an identification of a location of a first packed data source operand, an identification of a location of a second packed data source operand, and an identification of location of a packed data destination operand, wherein the opcode is to indicate an arithmetic operation execution circuitry is to perform, for each data element position of the identified packed data source operands, the arithmetic operation on BF16 data elements in that data element position in BF16 format and store a result of each arithmetic operation into a corresponding data element position of the identified packed data destination operand; and
executing the decoded instruction according to the opcode.

9. The method of claim 15, wherein the arithmetic operation is addition.

10. The method of claim 15, wherein the arithmetic operation is multiplication.

11. The method of claim 15, wherein the arithmetic operation is division.

12. The method of claim 15, wherein the arithmetic operation is subtraction.

13. The method of claim 15, further comprising:
translating the single instruction to one or more instructions of a different instruction set architecture, wherein the executing the decoded instruction according to the opcode comprises executing the one or more instructions of the different instruction set architecture.

14. A computer program comprising instructions which, when the program is executed by a computer, cause the computer to carry out the method as claimed in any preceding claim.
